(19) **Europäisches Patentamt / European Patent Office / Office européen des brevets**

(11) **EP 2 326 208 B1**

(12) # EUROPEAN PATENT SPECIFICATION

(45) Date of publication and mention
of the grant of the patent:
**16.01.2019 Bulletin 2019/03**

(21) Application number: **09749973.5**

(22) Date of filing: **17.03.2009**

(51) Int Cl.:
*A46B 15/00* (2006.01)     *A61C 19/04* (2006.01)
*A61C 17/22* (2006.01)

(86) International application number:
**PCT/FI2009/050205**

(87) International publication number:
**WO 2009/141489 (26.11.2009 Gazette 2009/48)**

(54) **INTELLIGENT TOOTHBRUSH MONITORING DEVICE**

INTELLIGENTE ZAHNBÜRSTENÜBERWACHUNGSVORRICHTUNG

DISPOSITIF INTELLIGENT DE CONTRÔLE POUR BROSSE À DENTS

(84) Designated Contracting States:
**AT BE BG CH CY CZ DE DK EE ES FI FR GB GR
HR HU IE IS IT LI LT LU LV MC MK MT NL NO PL
PT RO SE SI SK TR**
Designated Extension States:
**AL BA RS**

(30) Priority: **23.05.2008 FI 20085488**

(43) Date of publication of application:
**01.06.2011 Bulletin 2011/22**

(73) Proprietor: **Brushgate Oy
00130 Helsinki (FI)**

(72) Inventors:
 • **PUURUNEN, Juha-Pekka**
  **FI-73100 Lapinlahti (FI)**
 • **VISA, Ari**
  **FI-02120 Espoo (FI)**
 • **COLLIN, Jussi**
  **FI-37830 Viiala (FI)**
 • **KANTOLA, Jouni**
  **FI-27510 Eura (FI)**
 • **AVDOUEVSKI, Ivan**
  **FI-02760 Espoo (FI)**
 • **MERIHEINÄ, Ulf**
  **FI-01150 Söderkulla (FI)**
 • **VILJANEN, Teijo**
  **FI-02750 Espoo (FI)**

(74) Representative: **Kolster Oy Ab
(Salmisaarenaukio 1)
P.O. Box 204
00181 Helsinki (FI)**

(56) References cited:
WO-A1-2006/137648      WO-A1-2006/137648
WO-A2-2007/122491      CA-A1- 2 232 528
DE-A1- 3 716 490       DE-A1- 10 154 946
DE-A1- 10 154 946      FR-A1- 2 832 298
FR-A1- 2 832 298       JP-A- 2005 152 217
KR-A- 20050 080 750    US-A- 4 716 614
US-A- 4 716 614        US-A- 5 673 451
US-A- 5 673 451        US-A1- 2006 040 246
US-A1- 2007 182 571    US-A1- 2007 182 571
US-A1- 2007 270 221    US-A1- 2007 270 221
US-B1- 6 536 068       US-B1- 6 536 068

• BERGSTEN J E: "iBrush - the toothbrush that
makes you never want to stop brushing your
teeth", 20060427 , 27 April 2006 (2006-04-27),
XP008135896, Retrieved from the Internet:
URL:http://www.cse.chalmers.se/research/gr
oup/idc/ituniv/student/2003/ubicomp/ibrush
/index.htm [retrieved on 2012-05-18]
• ALLEN C R ET AL: "Development of a
force-sensing toothbrush instrument using pic
micro-controller technology for dental hygiene",
MECHATRONICS, PERGAMON PRESS,
OXFORD, GB, vol. 6, no. 2, 2 March 1996
(1996-03-02), pages 125-140, XP004047541, ISSN:
0957-4158, DOI: 10.1016/0957-4158(95)00085-2

- BERGSTEN J. ET AL: 'iBrush - the toothbrush that makes you never want to stop brushing your teeth' PROJECT REPORT, [Online] 27 April 2006, XP008135896 Retrieved from the Internet: <URL:http://web.archive.org/web/20060427030 824/www.cs.chaimers.se/idc/ituniv/student/2 003/ubicomp/ibrush/technology.htm, http://web.archive.org/web/20060501054732/w ww.cs.chalmers.se/idc/ituniv/student/2003/u bicomp/ibrush/Texter/Blockschema.pdf> [retrieved on 2009-05-22]
- 'Proceedings of the 29th Annual International Conference of the IEEE EMBS, Cite Internationale, Lyon, France, August 23 - 26, 2007. Piscataway: IEEE, 2007', 2007, PISCATAWAY, ISBN 1-4244-0788-5 article LEE K-H. ET AL: 'Tooth brushing Pattern Classification using Three-Axis Accelerometer and Magnetic Sensor for Smart Toothbrush', pages 4211 - 4214, XP031150422
- ALLEN C. R. ET AL: 'Development of a force-sensing toothbrush instrument using PIC micro-controller technology for dental hygiene' MECHATRONICS vol. 6, no. 2, March 1996, ISSN 0957-4158 pages 125 - 140, XP004047541

Description

BACKGROUND OF THE INVENTION

1. Field of the Invention

This invention relates to a device for monitoring the use of a toothbrush in order to give the user feedback about teeth brushing.

2. Description of Prior Art

Previously there is known from WO 2006/137648 a toothbrushing pattern analyzing device comprising a geomagnetic sensor, an acceleration sensor, and an angular velocity sensor for analyzing the patterns used during toothbrushing. The device compares the amount of a user's effective motion with a target, and informs the user when the target has been reached.
One drawback with this known device are the costs involved in producing such a device. The prize of the components needed to produce the device and also the space needed by the components are significant.
Another drawback is that this device does not make it possible to take into account individual factors involved in brushing teeth. Different persons tend to brush their teeth by using individual brushing patterns and by keeping their head and the toothbrush in different positions while brushing.

SUMMARY OF THE INVENTION

An object of the present invention is to solve the above mentioned drawback and to provide a more cost-effective and space saving solution for monitoring toothbrushing, which makes it possible to take into account individual factors in the use of a toothbrush. These and other objects are achieved with the toothbrushing monitoring device of independent claim 1.
In the present invention it is sufficient to utilize a sensor apparatus consisting of an accelerometer only, and which is configured to produce data indicating inclination of the toothbrush during use. Additional cost-increasing and space-consuming sensor components to track the movement or position of the toothbrush are not needed when the accelerometer is used in this way. In addition, differences in individual behaviour while brushing teeth can be taken into account, as the device is provided with a switch that allows the user to set the device into a teaching mode, wherein the data produced by the accelerometer is stored into the memory as reference data for subsequent use. In this way the user can at any desired point of time store individual reference data into the memory of the device in order to create reference data that takes into account the user's own individual behaviour while brushing the teeth.
Preferred embodiments of the invention are disclosed in the dependent claims.

BRIEF DESCRIPTION OF DRAWINGS

In the following the present invention will be described in closer detail by way of example and with reference to the attached drawings, in which

Figure 1 is a block diagram illustrating a preferred embodiment of a monitoring device,
Figure 2 illustrates an electrical toothbrush with a monitoring device of Figure 1,
Figure 3 illustrates a toothbrush with a monitoring device of Figure 1,
Figures 4 and 5 illustrate one way of indicating the result of toothbrushing to a user,
Figures 6 and 7 illustrate measurements carried out during toothbrushing with the electrical toothbrush of Figure 2,
Figure 8 illustrates reference data stored in the monitoring device,
Figure 9 illustrates measurements carried out during toothbrushing with the toothbrush of Figure 3,
Figure 10 illustrates data transfer from the monitoring device to external equipment,
Figures 11a to 11d illustrate a solution for determining which part of the teeth is being brushed, and
Figure 12 illustrates a further embodiment of a toothbrush with a monitoring device.

DESCRIPTION OF AT LEAST ONE EMBODIMENT

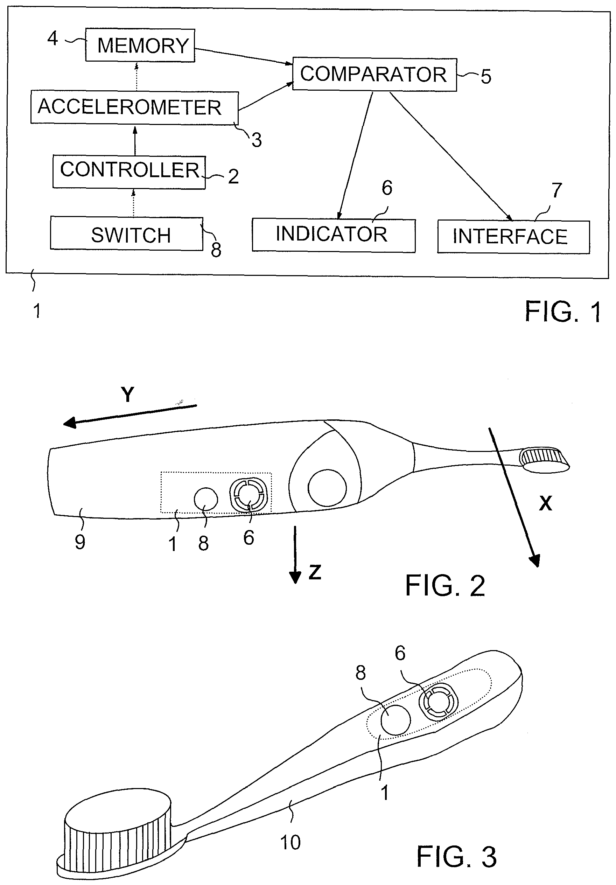

Figure 1 is a block diagram illustrating a preferred embodiment of a monitoring device 1. The monitoring device can be integrated into a toothbrush or alternatively consist of a separate part that is attached to a toothbrush. The latter alternative makes it possible to detach the monitoring device from the first toothbrush and attach it to a new toothbrush once the first toothbrush is worn out.
The monitoring device comprises a controller 2 controlling the operation of the monitoring device. The controller 2 and the comparator 5 can be carried out with circuitry or as a combination of a computer program and circuitry. In the latter case a processor running a computer program can carry out the tasks of the controller 2 and the comparator 5.
A three-axis accelerometer 3 is utilized to detect the inclination of the toothbrush during use, in other words the angles at which the toothbrush and the monitoring device attached to the toothbrush are held during use. The accelerometer can be a SCA 3000 available from VTI Technologies Oy, P.O. Box 27, FI-01621 Vantaa, Finland, for instance.
The output of a three-axis accelerometer can be expressed as:

$$\overline{m}_{SF}^{B} = \frac{d}{dt}\overline{v}^{B} - \overline{g}^{B} + \overline{\varepsilon} \quad (1)$$

$(1),$

where the result vector (3 components) corresponds to the change in the velocity of an object, reduced by the gravitation vector. In addition an error term is always included. The upper index B (Body frame) refers to a coordinate system attached to the accelerometer (in this case the monitoring device). The measurements are done in this coordinate system.

The result does not, therefore, consist of acceleration only, and in literature the term Specific Force is utilized. Specific force acceleration is defined as the acceleration relative to non-rotating inertial space produced by applied non-gravitational forces measured by accelerometers.

Due to equation (1) an accelerometer can be used to measure both inclination (when the change of velocity is known) and acceleration (when gravitational acceleration in body frame is known). In the measurements carried out with the monitoring device 1, acceleration is assumed to be noise disturbing the inclination or angle measurements.

During toothbrushing the accelerometer 3 therefore produces and forwards measurement data to the comparator 5. This produced data indicates the inclination, in other words angles at which the monitoring device 1 and toothbrush are held during use. In addition the reference data may also indicate the time used (seconds for instance) and the brush order (transfer from one position to another). The comparator 5 also receives reference data from the memory 4. The reference data is compared with the produced data once the use of the toothbrush has ended. The result of the comparison is used to give feedback to the user with an indicator 6. In a simple case this indicator can consist of a single LED (Light Emitting Diode) which by flashing in a predetermined way informs the user whether or not the result of the toothbrushing is accepted or not accepted. Alternatively the indicator 6 can consist of a display, for instance an LCD (Liquid Crystal Display), or of several LEDs which are used to indicate what parts of the teeth were not brushed thoroughly enough. The monitoring device can be configured to automatically inform the user about the result of the toothbrushing with the LED or display by indicating the result for a predetermined time period after the brushing has ended.

Instead of a visual indicator it is possible to use an indicator which produces sound, such as a buzzer producing a predetermined beep or a speech generator producing instructions after toothbrushing in a case where the result is not acceptable. In this way the user will get immediate feedback regarding the brushing.

In the embodiment of Figure 1 the monitoring device 1 also includes an interface 7 for forwarding the result of the comparison to an external device. Such an interface is, however, not essential for all embodiments, as sufficient feedback can be given to the user via the indicator 6.

In the case of a wired connection to an external device, the interface may include electrical contacts which are used by the monitoring device for communication with the external device. Alternatively, in the case of a wireless interface 7, the interface 7 may include a radio transmitter for transmitting the measurement result via a radio path to the external device.

The monitoring device 1 also includes also a switch 8 for setting the monitoring device into a teaching mode. After actuation of the switch 8 the accelerometer 3 is configured to forward the produced data to the memory 4, where it is stored for subsequent use during the use of the toothbrush.

The teaching mode makes it possible for the user to store individual reference data into the memory 4. After pressing the switch 8, the user uses the toothbrush to brush his or her teeth as thoroughly as possible. Second actuation of the switch 8 may end the teaching mode. The result is that reference data indicating angles at which this particular user holds the toothbrush during use is stored in the memory as reference data. In addition the reference data may also indicate the time used and the brush order (transfer from one position to another). This individual reference data is then used for analyzing how thoroughly this particular user will brush his or her teeth in the future. The teaching mode therefore makes it possible to take into account individual behaviour (the toothbrush or the user's head is held at individual angles, for instance) while brushing the teeth.

It is possible to store individual reference data for several persons in the memory of the monitoring device. In that case an identifier of the person who used the toothbrush during the teaching mode is stored in the memory together with the reference data. This possibility is advantageous in a case where several persons use the same toothbrush (with their personal attachable brush parts). In that case the monitoring device is, in the best case, able to automatically identify the person using the toothbrush by selecting the reference data that best matches the data produced during the use of the toothbrush. Alternatively the toothbrush may include an interface which offers the user the possibility to enter his or her identifier in order for the monitoring device to be able to select the correct reference data from the memory.

Figure 2 illustrates an electrical toothbrush 9 with a monitoring device of Figure 1.

In the case of an electrical toothbrush the energy needed to operate the monitoring device can be taken from the same battery which is used for energizing the electrical motor of the toothbrush. The monitoring device 1 can be integrated into the electrical toothbrush 9, as illustrated, or alternatively attached as an extension to the body (the left end in Figure 2) of the toothbrush 9, for instance.

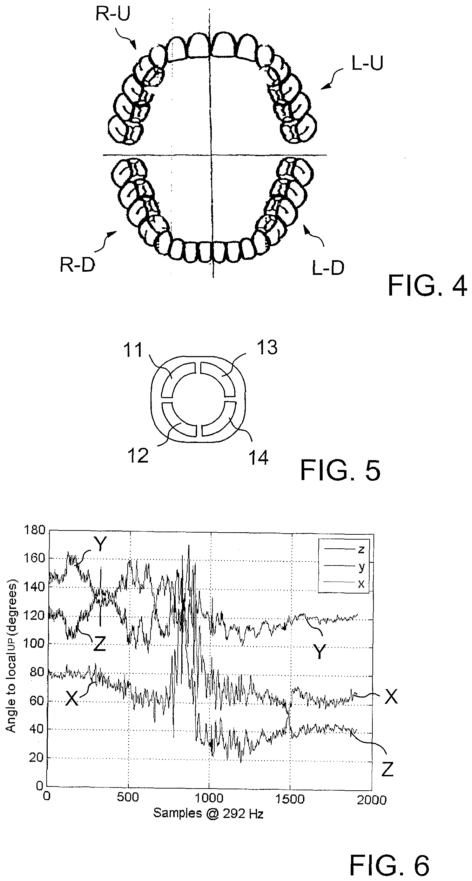

For the purpose of illustrating the coordinate systems used for producing the diagrams in Figures 6 to 9, the directions of the X-axis, Y-axis and Z-axis are indicated in Figure 2. For clarifying purposes, the direction of the X-axis is generally the same as the direction of the bristles in the brush, the direction of the Y-axis is generally the same as the direction of the center line of the tubular body of the toothbrush, and the Z-axis is directed sideways from the body of the toothbrush, thus forming a 90° angle with the X- and Y-axis. It should, however, be observed that the exact directions of the axes are not important for the invention as such, but only in order to be able to understand the angles illustrated in the exemplary diagrams of Figures 6 to 9.

Figure 3 illustrates a toothbrush with the monitoring device of Figure 1. Also in this embodiment it is, by way of example, assumed that the monitoring device has been integrated into the toothbrush 10. However, when considering the price of an ordinary toothbrush and the price of the electronics needed for the monitoring device 1, it may in many cases be more advantageous to utilize a separate monitoring device which is attached to the toothbrush 10 (as an extension to the handle, for instance), and detached for use in another toothbrush once the old one has been disposed.

Figures 4 and 5 illustrate one way of indicating the result of toothbrushing to a user.

Four different regions of teeth can be identified in Figure 4, in other words left-up L-U, left-down L-D, right-up R-U and right-down R-D. In many cases sufficient feedback can be given to the user by simply indicating that one (or more) of these four regions has not been brushed thoroughly enough. This can be done by using an indicator of Figure 5. This indicator, which can be implemented in practice with four LEDs or an LCD display, for instance, includes one sector 11 to 14 for each region shown in Figure 4. If sector 11 is illuminated in red on the indicator of Figure 5 after brushing, the user understands that region R-U of Figure 4 requires more thorough brushing, for instance. Similarly, if sector 13 is illuminated in red on the indicator of Figure 5 after brushing, the user understands that region L-U of Figure 4 requires more thorough brushing, for instance. In case the toothbrushing is acceptable the indicator can indicate this by illuminating in green, for instance. Naturally also other colors and ways of illuminating the indicator can be utilized in order to provide the user with feedback.

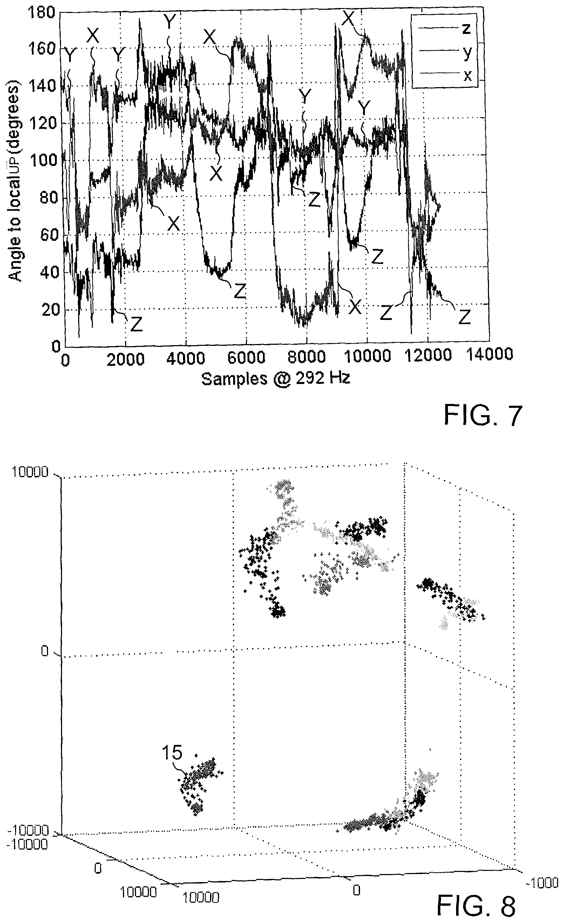

Figures 6 and 7 illustrate measurements carried out during toothbrushing with the electrical toothbrush 9 of Figure 2.

Figure 6 illustrates measurement data, in other words data produced by the accelerometer 3 while the electrical toothbrush 9 is used to brush the inside of the teeth of the upper jaw, in other words the inside of regions L-U and R-U in Figure 4, moving the brush from left to right (as seen by the user). A substantial change in the Z-angle can be seen around sample 800, where the brush is turned by the user in the front part of the teeth while moving from region L-U to R-U.

Figure 7 illustrates similar measurement data with the difference that the electrical toothbrush 9 is used to brush all teeth. The brushing order is from the upper outer surfaces from left to right, then the right lower outer surface towards left, lower biting surfaces from left to right, upper biting surfaces from right to left, and finally upper inner surfaces from left to right and lower inner surfaces from right to left.

On the basis of the diagram of Figure 7 it can be seen that the angle combination used while brushing different parts of the teeth is different. On the basis of the angle combinations (values of X, Y and Z angles) it is possible to identify which part of the mouth has been brushed. This is illustrated more clearly in Figure 8.

Figure 8 illustrates reference data stored in the memory of the monitoring device. In Figure 8 the output from the accelerometer while brushing different parts of the teeth is indicated three-dimensionally. In Figure 8 only such samples are illustrated which are located in proximity to a plurality of other samples.

It can be seen that the data includes several clusters of samples for different angle combinations. For instance cluster 15 consists of samples obtained while brushing the right upper inner surface of the teeth, the toothbrush being, during the moments when these samples are taken, kept relatively steady in a particular inclination (angle combination).

If a person intends to brush his or her teeth as thoroughly as when the reference data illustrated by the clusters in Figure 8 was obtained, then the accelerometer should produce data from which a similar cluster pattern can be identified. If one of the clusters is missing, for instance cluster 15, then it is possible to determine the specific combination of angles (XYZ) which is needed in order to obtain samples for this cluster, and based on this angle combination (with a certain accuracy for each angle) to determine the part of the teeth, in this case the right upper inner surface of the teeth, that has not been brushed thoroughly enough. This information can then be provided to the user with the indicator of the monitoring device.

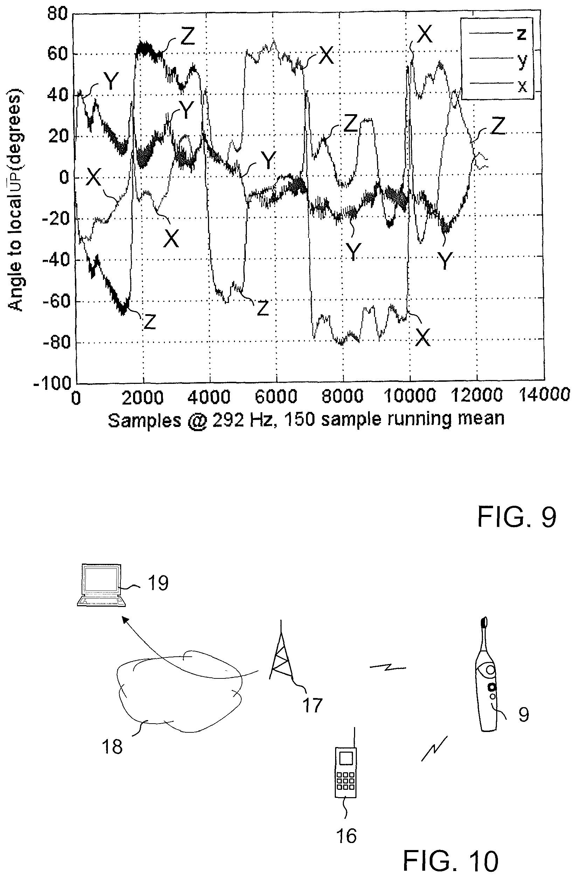

Figure 9 illustrates measurements carried out during toothbrushing with the toothbrush 10 of Figure 3.

As the toothbrush 10 is not electrical and the user must therefore continuously move the brush back and forth, a disturbing pattern with a frequency of about 4 - 5 Hz is included in the signal from the accelerometer. In Figure 9 this disturbing signal has been eliminated by low pass filtering.

It can be seen from Figure 9 that also in the case of a non-electrical toothbrush it is possible to utilize a monitoring device 1 to determine the angles used during brushing. A solution similar to the one for the electrical toothbrush can therefore be used to analyze how thorough the user has been, and to indicate regions which need additional brushing.

With the non-electrical toothbrush 10 additional information is, however, available. This additional information can be seen in Figure 9 as a peak for each time the user has moved the brush to brush the following tooth. It is therefore also possible to calculate the number of such movements in order to determine how many times the user has moved the brush during toothbrushing. In order to obtain a brush result which is as thorough as the one for the reference data (teaching mode) the number of movements should at least not be substantially smaller than the number of movements indicated by the reference data.

The additional information indicating the number of times the user has moved the brush to brush a following tooth can also be utilized for determining when the brush needs to be renewed. This can be achieved by arranging the monitoring device to maintain a counter indicating the number of such movements performed with the specific brush since the brush was taken into use for the first time. If the counter reaches a predetermined limit value the monitoring device can indicate to the user with the indicator that it is time to renew the brush.

Figure 10 illustrates data transfer from the monitoring device to external equipment. In Figure 10 it is assumed that the monitoring device used for the electrical toothbrush 9 of Figure 2 includes an interface with a radio transmitter for forwarding the result of the comparision to an external device. The monitoring device may include a user interface (at least one additional switch) which can be used by the user in order to trigger transmission of the result of the comparison to the external device. Alternatively the transmission can occur automatically each time the toothbrush has been used.

It is possible that all parts of the monitoring device are encapsulated with each other and integrated into or attached to the body of the electrical toothbrush 9. Alternatively the radio transmitter can be arranged separately from the other parts, for instance in a battery charger of the electrical toothbrush 9. In that case the interface 7 may include contact terminals in the toothbrush 9 which are connected to the corresponding terminals in the battery charger for forwarding the result of the comparison via a wired connection to the transmitter in the battery charger. The radio transmitter in the battery charger then transmits this comparison result further via the wireless radio connection to the external device.

In Figure 10 it is illustrated that the external device can be an external device 16, such as a mobile phone, PDA or computer, which receives the information directly from the monitoring device via a short range radio connection. Such a short range radio connection can be a Bluetooth or a Wibree connection, for instance. In this way the user of the external device 16 can receive information about how thoroughly the toothbrush 9 has been used.

Figure 10 also illustrates an alternative embodiment, where the monitoring device includes a transmitter of a cellular radio system 18. Also in this case the radio transmitter can be located in connection with the electrical toothbrush 9 or alternatively in connection with the charger of the electrical toothbrush 9. In such an embodiment the comparison result can be transmitted via a base station 17 and the cellular radio system to an external device 19 located further away than the range of a short range radio system.

The transmission of information via a cellular radio system to the external device makes it possible to have an advertiser involved, in which case an advertisement can be added to the comparision result by means of network elements in the cellular radio system. The user receives the advertisement with the comparison result. An advantage with such a solution is that the advertiser can pay for the transmission of the comparison result from the electrical toothbrush 9 to the external device 19.

Though the invention has above been explained by referring specifically to a three axis accelerometer it should be observed that it is not necessary in all embodiments to utilize a three axis accelerometer, as already a two axis accelerometer makes it possible to obtain a substantial amount of information about the inclination of the toothbrush during use. In addition, a n-axis accelerometer makes it possible to determine the angular acceleration in addition to the inclination of the toothbrush.

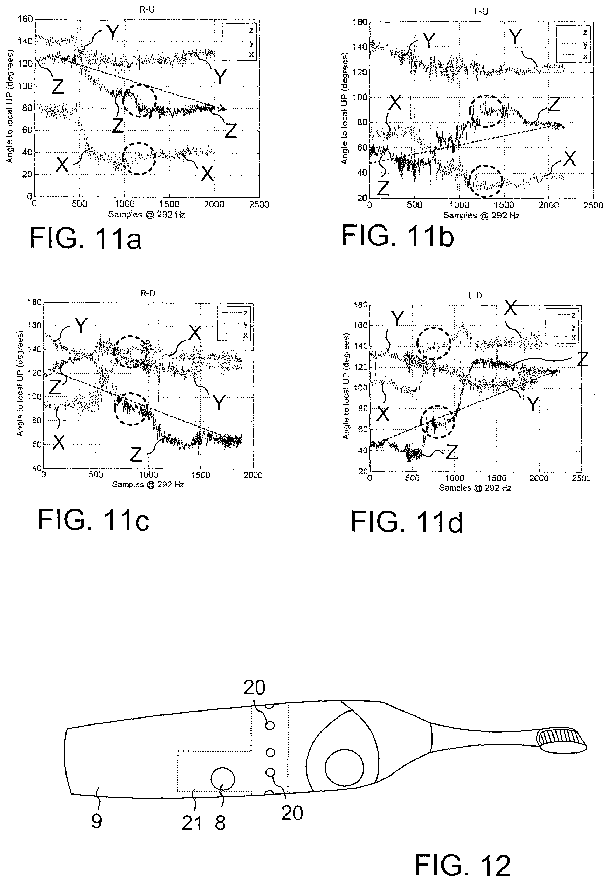

Figures 11a to 11c illustrate a solution for determining which part of the teeth is being brushed. This solution can be implemented in order to indicate to a user the result of toothbrushing as explained in connection with Figures 4 and 5, for instance.

In this embodiment the user is instructed to always brush each of the four illustrated regions R-U, L-U, R-D and L-D completely before moving to the next region. In addition each one of the four regions should be brushed in the order: outer surface, mastication surface and inner surface. As long as each region is brushed in this order, it does not matter in which order the user brushes the different regions, as the monitoring device is able to identify the brushed region automatically and to indicate the result of the brushing by using the correct sector 11 - 14 on the indicator.

Figure 11a illustrates brushing of region R-U in the previously mentioned brushing order, in other words outer surface, mastication surface and inner surface. Correspondingly Figures 11b to 11d illustrate brushing of regions L-U, R-D and L-D by using the same brushing order for each region.

When brushing in this way the region being brushed can be identified based on two factors:

1) when the Z axis is horizontal, in other words when the angle value indicated in the measurement results of Figures 11a to 11d for Z is 90°, the value of X is analyzed. If X is more than 90°, this means that one of the lower regions (R-D, L-D) is being brushed. However, if X is less than 90° then one of the upper regions (R-U, L-U) is being brushed.

2) if the value of Z is (generally) decreasing during brushing of one region, this means that one of the right hand regions (R-D, R-U) is being brushed. However, if the value of Z is (generally) increasing during brushing of the region, this means that one of the left hand regions (L-D, L-U) is being brushed.

Therefore, in this embodiment the monitoring device 1 is configured to analyze the above mentioned angles during the teaching mode and also during subsequent use of the toothbrush. In this way the monitoring device is capable of identifying the region which is currently being brushed. After brushing the reference data and the data produced during use of the toothbrush, for each one of the regions, is compared to each other. In case a region is identified, for which the number of samples or time spent by keeping the brush in this region as indicated by the reference data, does not correspond to the number of samples or time spent as indicated by the data produced during subsequent use, the sector 11 to 14 for this region on the indictor is used to inform the user of a bad brushing result in this region.

As an alternative to the above explained, it is also possible to allow the user to brush each one of the regions of Figure 4 in any desired way. Also in this case a region should be completely brushed before proceeding to the next region. The four regions may be brushed in any order.

In this case, however, it is more difficult for the monitoring device to identify the particular region which is being brushed. In that case the monitoring device may simply have an indicator with sectors numbered from one to four. Once the user has brushed a first region the result is indicated by using the first sector of the indicator. Once the user has brushed a second region the result is indicated by using the second sector. Once the user has brushed a third region the result is indicated by using the third sector, and so on. Consequently in this case the monitoring device is not able to inform the user where a particular region is located for which a poor brushing result has been identified. Instead the monitoring device can only illuminate sector 3 to indicate that it was the third brushed region where the brushing result was poor. In that case it is up to the user to remember which one was the third brushed region.

Figure 12 illustrates a further embodiment of a toothbrush with a monitoring device. The embodiment of Figure 12 is very similar as the one described in connection with Figure 2. Therefore the embodiment of Figure 12 will mainly be explained by pointing out the differences between these embodiments.

In Figure 12 the monitoring device includes an alternative indicator 20, as compared to the embodiment of Figure 2. In this embodiment the indicator includes a plurality of LED's, for instance, arranged as a ring around the body of the electrical toothbrush 9. One alternative is to include eight LED's in the indicator 20.

The toothbrush of Figure 12 is set into the teaching mode similarly as has been explained previously in order to produce reference data. During subsequent use the monitoring device 21, and while the toothbrush is kept in a particular position (XYZ angle combination) during brushing, the produced data is compared to the reference data obtained for this particular angle position. As soon as it is determined that the produced data and the reference data match, one of the LED's in the indicator 20 is illuminated. In this case the monitoring device always illuminates the LED which is directed towards a predetermined direction, such as upwards, at that particular moment.

Once the user has completed the toot brushing he should have kept the toothbrush in corresponding positions as during the teaching mode, and the monitoring device should have (one-by-one) illuminated each one of the LED's (always the one located uppermost at that particular moment). Thus, if the user observes that one of the LED's has not been illuminated, this means that the toothbrush has not been sufficiently used during brushing in a position where this not-illuminated LED is uppermost. The user is then able to turn the brush into such a position where the LED is uppermost and based on the brush position determine which region has not been sufficiently thoroughly brushed.

It is to be understood that the above description and the accompanying figures are only intended to illustrate the present invention. It will be obvious to those skilled in the art that the invention can be varied and modified also in other ways without departing from the scope of the invention.

**Claims**

1. A toothbrush monitoring device (1, 21), comprising:

   a sensor apparatus for producing data during use of a toothbrush (9, 10),
   a memory (4) for storing reference data,
   a comparator (5) for comparing said produced data with said reference data stored in the memory (4), and
   an indicator (6, 20) responsive to said comparator (5) for indicating to the user whether or not the produced data corresponds to the reference data, **characterized in**

   **that** said sensor apparatus consists only of an accelerometer (3), which is configured to produce data indicating inclination of the toothbrush (9, 10) during use, and
   **that** said monitoring device (1, 21) comprises a switch (8) for setting said monitoring device (1, 21) into a teaching mode, wherein the data produced by the accelerometer (3) is stored into said memory (4) for use as reference data during subsequent use of the toothbrush (9, 10), and
   said comparator (5) is configured to identify such brush positions (15) indicated by the reference data which cannot be found in the produced data, to utilize said identified brush positions to identify regions (L-U) of the teeth which should have been brushed with such brush positions, and to indicate to the user the identified regions with said indicator (6)

2. The monitoring device of claim 1, **characterized in that** said comparator (5) is configured to take into account in said comparison the number of samples indicating that the toothbrush (9, 10) has been held in a specific position, as indicated by the produced data and the reference data.

3. The monitoring device of claim 1 or 2, **characterized in that** said comparator (5) is configured to take into account in said comparison the number of times the toothbrush (10) has been moved to the following tooth, as indicated by the produced data and the reference data.

4. The monitoring device according to claim 1, **characterized in that** said brush positions are used for identifying at least one of four available regions, which include right up (R-U), right down (R-D), left up (L-U) and left down (L-D).

5. The monitoring device according to any one of claims 1 to 4, **characterized in that** said indicator (6) consists of a display.

6. The monitoring device according to any one of claims 1 to 4, **characterized in that** said indicator (6) consists of at least one LED.

7. The monitoring device according to any one of claims 1 to 4, **characterized in that** said indicator (20) includes a plurality of LED's arranged in a ring around the body of the monitoring device (21) or the toothbrush (9), and **in that** said monitoring device is configured to indicate a brush position for which the produced data does not correspond to the reference data by utilizing a predetermined corresponding LED among said plurality of LED's which is allocated for said particular brush position, and which should be turned into a predetermined direction while brushing with the toot brush in such position.

8. The monitoring device according to any one of claims 1 to 8, **characterized in that** said device (1, 21) includes an interface (7) for forwarding the result of the comparison to an external device (16, 19) for further processing.

9. The monitoring device according to claim 8, **characterized in that** said interface (7) includes a radio transmitter.

10. The monitoring device according to claim 9, **characterized in that** said radio transmitter is a short range radio transmitter.

11. The monitoring device according to claim 9, **characterized in that** said radio transmitter is a radio transmitter of a cellular radio system (18).

12. The monitoring device according to any one of claims 1 to 11, **characterized in that** said accelerometer is a three axis accelerometer.

13. The monitoring device according to any one of claims 1 to 12, **characterized in that** said comparator (5) is configured to take into account in said comparision the time that the toothbrush (9, 10) has been held in a specific position as indicated by the produced data and the reference data.

14. The monitoring device according to any one of claims 1 to 13, **characterized in that** said comparator (5) is configured to take into account in said comparision the brush order as indicated by a transfer of the toothbrush from one inclination to another as indicated by the produced data and the reference data.

**Patentansprüche**

1. Zahnbürstenüberwachungsvorrichtung (1, 21), mit:

   einer Sensorvorrichtung zur Erzeugung von Daten während der Benutzung einer Zahnbürste (9, 10),
   einem Speicher (4) zur Speicherung von Referenzdaten,
   einem Komparator (5) zum Vergleichen der erzeugten Daten mit Referenzdaten, die in dem Speicher (4) gespeichert sind, und
   einer Indikatoreinheit (6, 20), die auf den Komparator (5) anspricht und dem Benutzer anzeigt, ob die erzeugten Daten den Referenzdaten entsprechen oder nicht,

   **dadurch gekennzeichnet, dass**
   die Sensorvorrichtung nur aus einem Beschleunigungsmesser (3) besteht, der ausgebildet ist, Daten zu erzeugen, die eine Neigung der Zahnbürste (9, 10) während der Verwendung angeben, und
   die Überwachungsvorrichtung (1, 21) einen Schalter (8) aufweist, der ausgebildet ist, die Überwachungsvorrichtung (1, 21) in einen Lernmodus zu versetzen, in welchem die von dem Beschleunigungsmesser (3) erzeugten Daten in dem Speicher (4) zur Verwendung als Referenzdaten während einer nachfolgenden Verwendung der Zahnbürste (9, 10) gespeichert werden, und
   der Komparator (5) ausgebildet ist, solche von den Referenzdaten angegebenen Bürstenstellungen (15) zu erkennen, die in den erzeugten Daten nicht auffindbar sind, sodass die erkannten Bürstenstellungen benutzt werden, um Gebiete (L-U) der Zähne zu erkennen, die mit solchen Bürstenstellungen hätten geputzt werden sollen, und dem Benutzer die erkannten Gebiete mit der Indikatoreinheit (6) angezeigt werden.

2. Überwachungsvorrichtung nach Anspruch 1, **dadurch gekennzeichnet, dass** der Komparator (5) ausgebildet ist, in dem Vergleich die Anzahl an Abtastungen zu berücksichtigen, die angeben, dass die Zahnbürste (9, 10) in einer speziellen Stellung gehalten wird, die durch die erzeugten Daten und die Referenzdaten angegeben ist.

3. Überwachungsvorrichtung nach Anspruch 1 oder 2, **dadurch gekennzeichnet, dass** der Komparator (5) ausgebildet ist, in dem Vergleich die Häufigkeit, mit der die Zahnbürste (10) zu dem folgenden Zahn bewegt worden ist, wie durch die erzeugten Daten und die Referenzdaten angegeben ist, zu berücksichtigen.

4. Überwachungsvorrichtung nach Anspruch 1, **dadurch gekennzeichnet, dass** die Bürstenstellungen zum Erkennen mindestens eines von vier verfügbaren Gebieten verwendet werden, die rechts oben (R-U), rechts unten (R-D), links oben (L-U) und links unten (L-D) umfassen.

5. Überwachungsvorrichtung nach einem der Ansprüche 1 bis 4, **dadurch gekennzeichnet, dass** die Indikatoreinheit (6) aus einer Anzeige besteht.

6. Überwachungsvorrichtung nach einem der Ansprüche 1 bis 4, **dadurch gekennzeichnet, dass** die Indikatoreinheit (6) aus mindestens einer LED besteht.

7. Überwachungsvorrichtung nach einem der Ansprüche 1 bis 4, **dadurch gekennzeichnet, dass** die Indikatoreinheit (20) mehrere LEDs aufweist, die in einem Ring um den Körper der Überwachungsvorrichtung (21) oder die Zahnbürste (9) herum angeordnet sind, und die Überwachungsvorrichtung ausgebildet ist, eine Bürstenstellung anzugeben, für die die erzeugten Daten nicht den Referenzdaten entsprechen, indem eine vorbestimmte entsprechende LED der mehreren LEDs verwendet wird, die der speziellen Bürstenstellung zugeordnet ist, und die in eine vorbestimmte Richtung gedreht werden sollte, wenn mit der Zahnbürste in einer derartigen Stellung geputzt wird.

8. Überwachungsvorrichtung nach einem der Ansprüche 1 bis 8, **dadurch gekennzeichnet, dass** die Vorrichtung (1, 21) eine Schnittstelle (7) zur Weiterleitung des Ergebnisses des Vergleichs zu einem externen Gerät (16, 19) zur weiteren Verarbeitung aufweist.

9. Überwachungsvorrichtung nach Anspruch 8, **dadurch gekennzeichnet, dass** die Schnittstelle (7) einen Funksender enthält.

10. Überwachungsvorrichtung nach Anspruch 9, **dadurch gekennzeichnet, dass** der Funksender ein Funksender mit geringer Reichweite ist.

11. Überwachungsvorrichtung nach Anspruch 9, **dadurch gekennzeichnet, dass** der Funksender ein Funksender eines Funkzellensystems (18) ist.

12. Überwachungsvorrichtung nach einem der Ansprüche 1 bis 11, **dadurch gekennzeichnet, dass** der Beschleunigungsmesser ein 3-Achsen-Beschleunigungsmesser ist.

13. Überwachungsvorrichtung nach einem der Ansprüche 1 bis 12, **dadurch gekennzeichnet, dass** der Komparator (5) ausgebildet ist, in dem Vergleich die Zeitdauer zu berücksichtigen, während der die Zahnbürste (9, 10) in einer speziellen Stellung gehalten worden ist, die durch die erzeugten Daten und die Referenzdaten angegeben ist.

14. Überwachungsvorrichtung nach einem der Ansprüche 1 bis 13, **dadurch gekennzeichnet, dass** der Komparator (5) ausgebildet ist, in dem Vergleich die Putzreihenfolge zu berücksichtigen, die durch einen Übergang der Zahnbürste von einer Neigung zu einer weiteren Neigung angegeben wird, wobei dies durch die erzeugten Daten und die Referenzdaten angegeben wird.

**Revendications**

1. Dispositif de suivi de brosse à dents (1, 21), comprenant :

    un appareil de détection pour produire des données durant l'utilisation d'une brosse à dents (9, 10),
    une mémoire (4) pour stocker des données de référence,
    un comparateur (5) pour comparer lesdites données produites auxdites données de référence stockées dans la mémoire (4), et
    un indicateur (6, 20) réactif vis-à-vis dudit comparateur (5) pour indiquer à l'utilisateur si les données produites correspondent ou pas aux données de référence, **caractérisé en ce que**

ledit appareil de détection est uniquement constitué d'un accéléromètre (3), qui est configuré pour produire des données indiquant l'inclinaison de la brosse à dents (9, 10) durant l'utilisation, et **en ce que** ledit dispositif de suivi (1, 21) comprend un commutateur (8) pour régler ledit dispositif de suivi (1, 21) sur un mode apprentissage, où les données produites par l'accéléromètre (3) sont stockées dans ladite mémoire (4) pour l'utilisation comme données de référence durant l'utilisation ultérieure de la brosse à dents (9, 10), et

ledit comparateur (5) est configuré pour identifier de telles positions de brosse (15) indiquées par les données de référence qui ne peuvent pas être trouvées dans les données produites, pour utiliser lesdites positions de brosse identifiées afin d'identifier des régions des dents (L-U) qui auraient dû être brossées avec de telles positions de brosse, et pour indiquer à l'utilisateur les régions identifiées avec ledit indicateur (6).

2. Dispositif de suivi selon la revendication 1, **caractérisé en ce que** ledit comparateur (5) est configuré pour prendre en compte dans ladite comparaison le nombre d'échantillons indiquant que la brosse à dents (9, 10) a été tenue dans une position spécifique, telle qu'indiquée par les données produites et les données de référence.

3. Dispositif de suivi selon la revendication 1 ou 2, **caractérisé en ce que** ledit comparateur (5) est configuré pour prendre en compte dans ladite comparaison le nombre de fois que la brosse à dents (10) a été déplacée vers la dent suivante, tel qu'indiqué par les données produites et les données de référence.

4. Dispositif de suivi selon la revendication 1, **caractérisé en ce que** lesdites positions de brosse sont utilisées pour identifier au moins l'une des quatre régions disponibles, qui comprennent en haut à droite (RU), en bas à droite (R-D), en haut à gauche (L-U) et en bas à gauche (L-D).

5. Dispositif de suivi selon l'une quelconque des revendications 1 à 4, **caractérisé en ce que** ledit indicateur (6) est constitué d'un affichage.

6. Dispositif de suivi selon l'une quelconque des revendications 1 à 4, **caractérisé en ce que** ledit indicateur (6) est constitué d'au moins une DEL.

7. Dispositif de suivi selon l'une quelconque des revendications 1 à 4, **caractérisé en ce que** ledit indicateur (20) comprend une pluralité de DEL disposées en un anneau autour du corps du dispositif de suivi (21) ou de la brosse à dents (9), et **en ce que** ledit dispositif de suivi est configuré pour indiquer une position de brosse pour laquelle les données produites ne correspondent pas aux données de référence en utilisant une DEL correspondante prédéterminée parmi ladite pluralité de DEL qui sont attribuées à ladite position de brosse particulière, et qui pourraient être tournées dans un sens prédéterminé durant le brossage avec la brosse à dents dans une telle position.

8. Dispositif de suivi selon l'une quelconque des revendications 1 à 8, **caractérisé en ce que** ledit dispositif (1, 21) comprend une interface (7) pour faire avancer le résultat de la comparaison vers le dispositif externe (16, 19) pour traitement ultérieur.

9. Dispositif de suivi selon la revendication 8, **caractérisé en ce que** ladite interface (7) comprend un transmetteur radio.

10. Dispositif de suivi selon la revendication 9, **caractérisé en ce que** ledit transmetteur radio est un transmetteur radio de plage courte.

11. Dispositif de suivi selon la revendication 9, **caractérisé en ce que** ledit transmetteur radio est un transmetteur radio d'un système radio cellulaire (18).

12. Dispositif de suivi selon l'une quelconque des revendications 1 à 11, **caractérisé en ce que** ledit accéléromètre est un accéléromètre à triple axe.

13. Dispositif de suivi selon l'une quelconque des revendications 1 à 12, **caractérisé en ce que** ledit comparateur (5) est configuré pour prendre en compte dans ladite comparaison le temps durant lequel la brosse à dents (9, 10) a été maintenue dans une position spécifique tel qu'indiqué par les données produites et les données de référence.

14. Dispositif de suivi selon l'une quelconque des revendications 1 à 13, **caractérisé en ce que** ledit comparateur (5) est configuré pour prendre en compte dans ladite comparaison l'ordre de brosse tel qu'indiqué par un transfert de la brosse à dents depuis une inclinaison vers une autre tel qu'indiqué par les données produites et les données de référence.

FIG. 1

FIG. 2

FIG. 3

FIG. 4

FIG. 5

FIG. 6

FIG. 7

FIG. 8

FIG. 9

FIG. 10

FIG. 11a

FIG. 11b

FIG. 11c

FIG. 11d

FIG. 12

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2006137648 A